Europäisches Patentamt

European Patent Office

Office européen des brevets

(11) Numéro de publication: **0 353 808 B1**

# (12) FASCICULE DE BREVET EUROPEEN

(45) Date de publication de fascicule du brevet: **22.12.93** (51) Int. Cl.⁵: **H04M 1/76**

(21) Numéro de dépôt: **89201871.4**

(22) Date de dépôt: **17.07.89**

---

(54) **Circuit de compensation de courant.**

---

(30) Priorité: **22.07.88 FR 8809953**

(43) Date de publication de la demande:
**07.02.90 Bulletin 90/06**

(45) Mention de la délivrance du brevet:
**22.12.93 Bulletin 93/51**

(84) Etats contractants désignés:
**DE FR GB**

(56) Documents cités:
**EP-A- 0 063 748**
**US-A- 3 810 032**
**US-A- 4 439 637**
**US-A- 4 453 037**

**IEEE JOURNAL OF SOLID-STATE CIRCUITS,
vol. SC-17, no. 3, juin 1982, pages 494-498,
IEEE, New York, US; K. EBERHARDT et al.:
"An integrated telphone speech circuit including a line fed loudspeaker amplifier"**

(73) Titulaire: **PHILIPS COMPOSANTS
4, rue du Port aux Vins
F-92150 Suresnes(FR)**

(84) Etats contractants désignés:
**FR**

(73) Titulaire: **N.V. Philips' Gloeilampenfabrieken
Groenewoudseweg 1
NL-5621 BA Eindhoven(NL)**

(84) Etats contractants désignés:
**DE GB**

(72) Inventeur: **Jouen, Philippe SOCIETE CIVILE
S.P.I.D.
156, Boulevard Haussmann
F-75008 Paris(FR)**
Inventeur: **Favoretto, José SOCIETE CIVILE
S.P.I.D.
156, Boulevard Hausmann
F-75008 Paris(FR)**

(74) Mandataire: **Charpail, François et al
Société Civile S.P.I.D.
156, Boulevard Haussmann
F-75008 Paris (FR)**

---

Rank Xerox (UK) Business Services
(3.10/3.6/3.3.1)

## Description

La présente invention a pour objet un circuit de compensation destiné à produire un courant de sortie présentant une caractéristique de courant donnée en fonction de la valeur d'un courant d'entrée, la caractéristique de courant présentant une valeur maximale et une valeur minimale, circuit comprenant un moyen pour délivrer un premier courant proportionnel au courant d'entrée, en série avec une première source de courant délivrant un deuxième courant proportionnel à un courant de référence, de manière à produire un premier courant résultant qui est positif lorsque le premier courant est supérieur au deuxième courant et nul dans le cas contraire, un premier étage de commutation agencé pour être à l'état bloqué lorsque le premier courant résultant est nul, et pour être traversé par celui-ci lorsqu'il est positif, un deuxième étage de commutation agencé pour être traversé par le même courant que le premier étage de commutation, une deuxième source de courant agencée pour délivrer un troisième courant proportionnel au courant de référence et disposée en série avec le deuxième étage de commutation, de manière à produire un deuxième courant résultant qui est positif lorsque le troisième courant est supérieur au premier courant résultant, un troisième étage de commutation agencé pour être à l'état bloqué lorsque le deuxième courant résultant est nul, et pour être traversé par celui-ci lorsqu'il est positif, un premier étage de sortie de courant agencé pour délivrer un courant égal au courant traversant le troisième étage de commutation et un deuxième étage de sortie de courant disposé en parallèle avec le premier étage de sortie de courant et agencé pour délivrer un courant égal au courant de référence, dont la valeur est donc ladite valeur minimale de la caractéristique de courant de sortie.

Un tel circuit a été mis en oeuvre pour effectuer un contrôle de gain d'un récepteur téléphonique, circuit commercialisé sous la référence TEA 1064.

Un circuit visant le même but, mais la structure différente a été également décrit dans le brevet US 3 810 032.

L'un et l'autre permettent d'obtenir un courant qui dépend linéairement d'un courant d'entrée, entre une limite inférieure et une limite supérieure. De tels circuits trouvent leur application notamment dans des postes téléphoniques d'abonné qui sont alimentés depuis un central à une tension donnée, en général 48V, le courant dont le poste d'abonné dispose étant de plus en plus faible au fur et à mesure qu'il est situé plus loin du central. Pour rendre la sensibilité du téléphone indépendante de la longueur de la ligne d'abonné et donc homogénéïser le niveau d'écoute entre les abonnés, le poste d'abonné comporte un étage amplificateur dont le rapport d'amplification dépend du courant qui l'alimente et ledit courant d'alimentation est fourni par un circuit de compensation alimenté par le courant de ligne, la compensation étant effectuée selon une loi linéaire aussi proche que possible de la courbe théorique.

Cependant, dans le cas de lignes très longues et/ou mettant en oeuvre des fils de section modeste, la courbe théorique s'étend sur une dynamique plus grande et tend à devenir plus incurvée.

La compensation linéaire précédente n'est plus alors suffisamment précise, ce qui défavorise certains abonnés.

L'invention se propose de remédier à cet inconvénient en proposant un circuit dont l'idée de base est de fournir une compensation présentant au moins deux régions linéaires de pentes différentes, de manière à approximer plus particulièrement mais non exclusivement de telles courbes avec une précision suffisante, ou d'approximer les courbes plus classiques avec une précision accrue.

Le dispositif selon l'invention est caractérisé en ce qu'il comporte au moins un circuit de compensation disposé en parallèle avec l'un des premier et deuxième circuits de commutation et comprenant d'une part une troisième source de courant agencée pour délivrer un quatrième courant proportionnel au courant de référence, en série avec une quatrième source de courant agencée pour délivrer un courant proportionnel à celui qui est délivré par le premier étage de commutation et d'autre part un circuit de blocage agencé pour connecter la quatrième source de courant en parallèle avec au moins un des premier et deuxième circuits de commutation lorsque le courant qui traverse la quatrième source de courant est supérieur au quatrième courant.

Selon un mode de réalisation, le premier circuit de commutation comporte un premier transistor dont le trajet collecteur-émetteur est disposé en parallèle avec la première source de courant et un deuxième transistor dont le trajet base-émetteur est disposé en parallèle sur le trajet collecteur-émetteur du premier transistor et le deuxième étage de commutation comporte un troisième transistor dont la base est connectée à celle du premier transistor. Le troisième circuit de commutation peut comporter un quatrième transistor dont le trajet collecteur-émetteur est disposé en parallèle avec le deuxième étage de commutation et un cinquième transistor dont le trajet base-émetteur est disposé en parallèle sur le trajet collecteur-émetteur du quatrième transistor et le premier étage de sortie peut comporter un sixième transistor dont la base est connectée à celle du quatrième transistor.

On obtient ainsi le résultat désiré avec un circuit qui reste simple, et les paramètres du circuit (pentes, points de changement de pente) peuvent être ajustés sans difficultés.

Selon un mode de réalisation avantageux, au moins un circuit de blocage comporte une première diode en série avec ledit moyen pour délivrer le premier courant proportionnel au courant d'entrée et une deuxième et une troisième diode en parallèle avec la quatrième source de courant. On obtient ainsi une courbe de compensation à deux pentes convenant tout particulièrement aux courbes dessinées pour les postes d'abonnés.

Selon un mode de réalisation, au moins un circuit de blocage comporte une quatrième diode en série avec la deuxième source de courant et une cinquième et une sixième diode en parallèle avec la quatrième source de courant.

Selon un mode de réalisation préféré, correspondant à une compensation à trois pentes convenant particulièrement au cas des postes d'abonnés, deux circuits de compensation sont disposés en parallèle avec le premier circuit de commutation.

L'invention sera mieux comprise à la lecture de la description qui va suivre donné à titre d'exemple non limitatif, en liaison avec les dessins qui représentent :

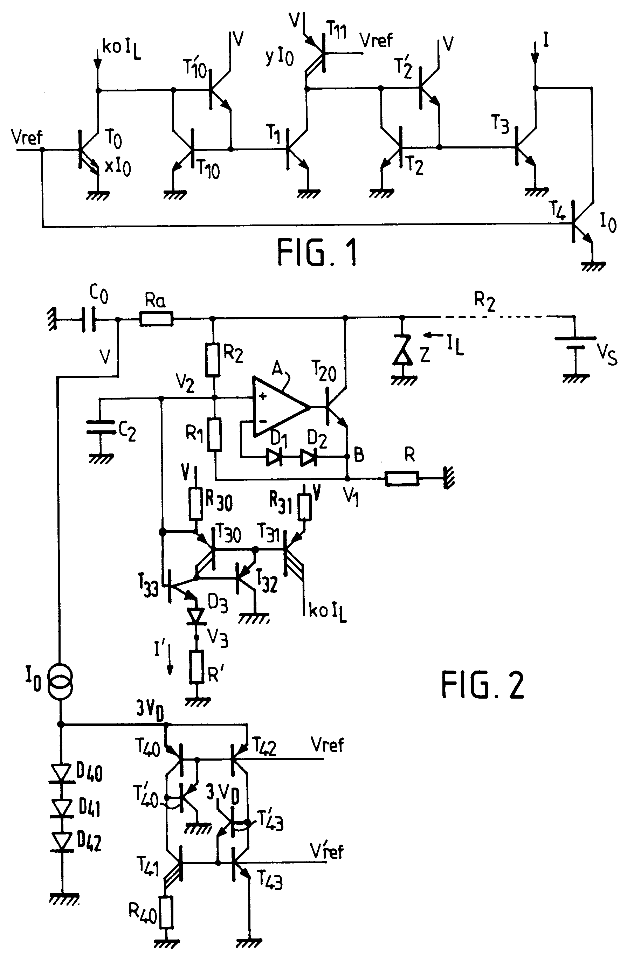

- la figure 1, un circuit de contrôle de gain selon l'art antérieur
- la figure 2, un circuit pour produire un courant dans un rapport donné avec le courant de ligne

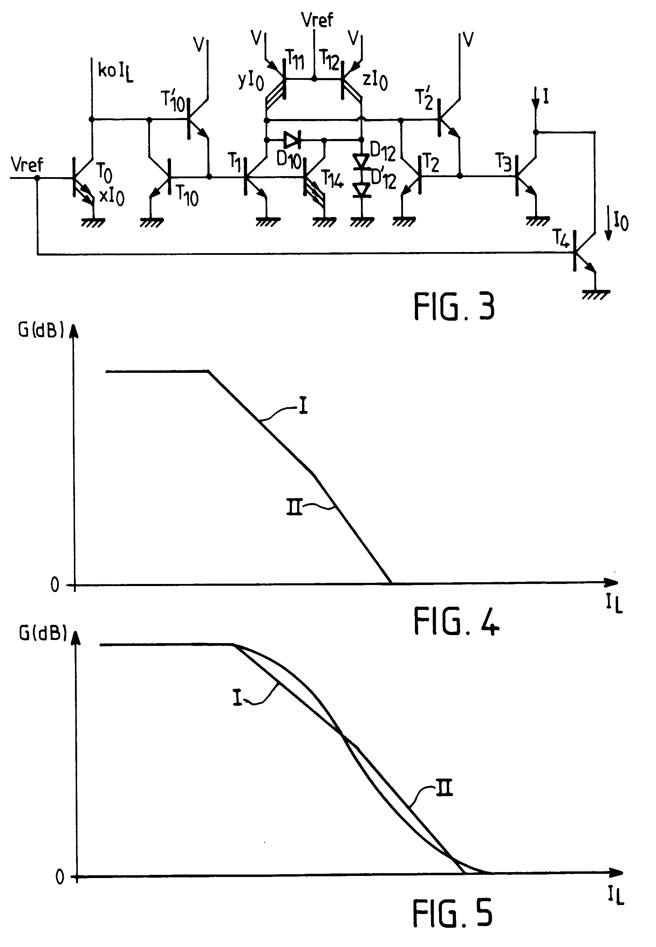

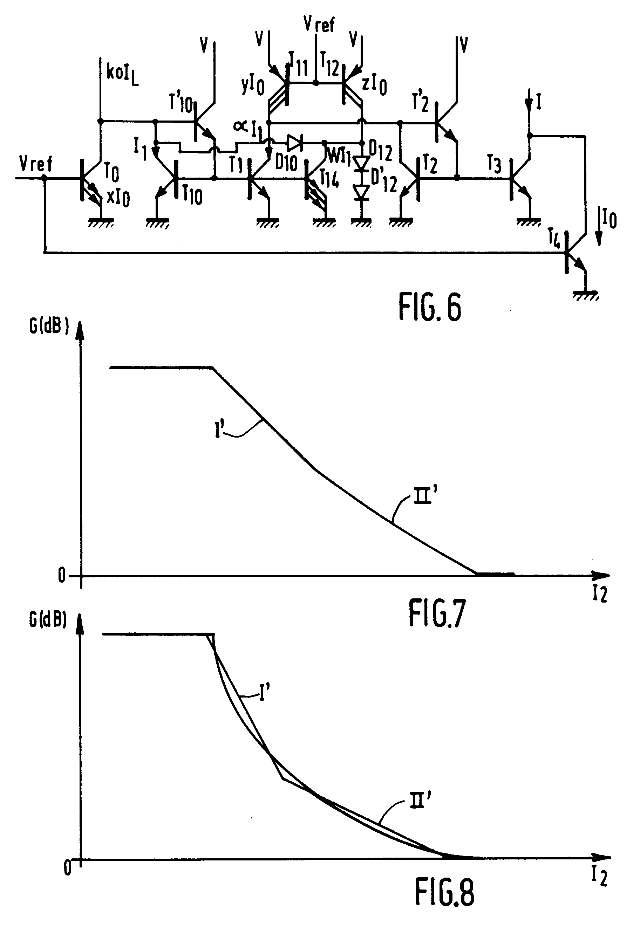

- la figure 3, un circuit de contrôle de gain selon un premier mode de réalisation de l'invention, la figure 4, les courbes représentant la caractéristique de gain en fonction du courant de ligne pour un circuit selon la figure 3, et la figure 5 l'adaptation de la courbe à deux pentes du circuit de la figure 3 au profil d'une courbe de compensation donnée.
- la figure 6, un circuit de contrôle de gain selon un deuxième mode de réalisation de l'invention, la figure 7, une courbe représentant la caractéristique de gain en fonction du courant de ligne pour un circuit selon la figure 6, et la figure 8, l'adaptation de la courbe à deux pentes de la figure 6 au profil d'une courbe de compensation donnée.

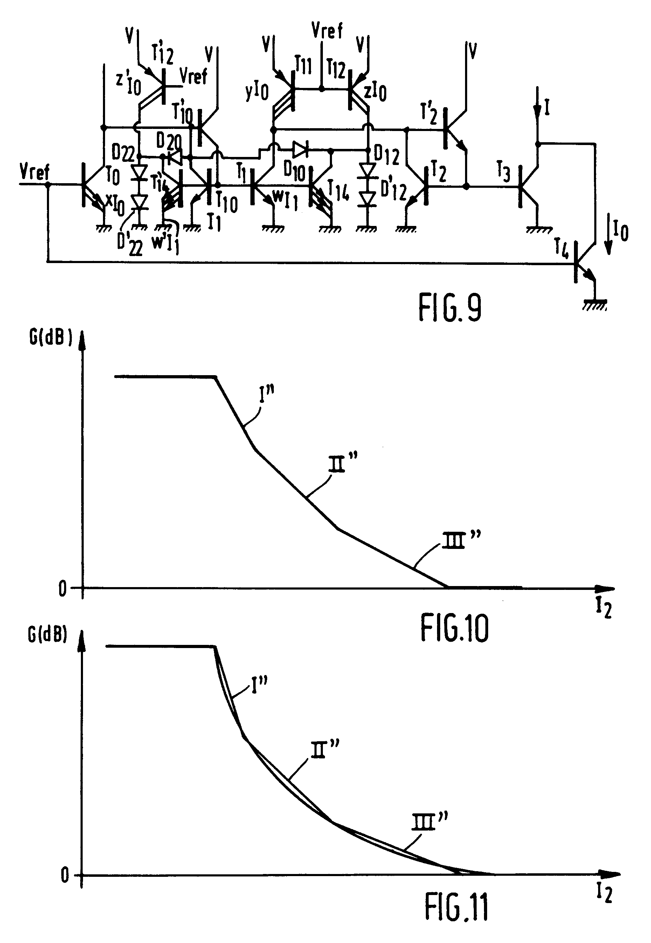

- la figure 9, un circuit de contrôle de gain selon un mode préféré de l'invention, la figure 10, une courbe représentant la caractéristique de gain en fonction pour un circuit selon la figure 9, et la figure 11 l'adaptation de la courbe à trois pentes de la figure 9 au profil d'une courbe de compensation donnée.

Un circuit de contrôle de gain de la figure 1 (art antérieur) a pour fonction de fournir un courant I de commande de gain dont la valeur est $I_o$ (gain minimum) quand le courant de ligne atteint une valeur maximale, $I_o + yI_o$ quand le courant de ligne a une valeur nominale minimale, et qui varie linéairement entre ces deux valeurs quand le courant de ligne est compris entre ces deux valeurs nominales Pour $y = 1$ on obtient une dynamique de correction de 6dB et de 9dB pour $y = 1.75$.

Le circuit de la figure 1 comporte un transistor npn $T_o$ présentant au moins un émetteur qui est porté au pôle de mode commun (masse), une base sur laquelle est appliquée une tension de référence $V_{ref}$ de manière que son trajet collecteur-émetteur soit traversé par un courant $xI_o$ (x étant le nombre d'émetteurs du transistor $T_o$ ou bien le rapport entre la surface des émetteurs des transistors $T_4$ - (voir plus loin) et $T_o$), et un collecteur qui est connecté à une source de courant d'intensité $k_oI_L$. $I_L$ représente le courant de ligne reçu d'un poste d'abonné et dont la valeur dépend de l'éloignement de l'abonné par rapport au central, et $k_o$ un rapport donné.

Un transistor npn $T_{10}$ a son émetteur à la masse, son collecteur connecté à celui de $T_o$ et sa base connectée à celle d'un transistor npn $T_1$. Le transistor npn $T'_{10}$ a sa base connectée aux collecteurs des transistors $T_o$ et $T_{10}$, son émetteur à la base des transistors $T_{10}$ et $T_1$, et son collecteur connecté à une source de tension d'alimentation V. Le transistor $T_1$ a son émetteur à la masse, et son collecteur connecté à celui d'un transistor npn $T_2$ ainsi qu'à une source de courant d'intensité $yI_o$, constituée dans le cas d'espèce par un transistor pnp $T_{11}$ présentant un émetteur connecté à la source de tension V, dont la base est au potentiel de référence Vref, et au moins un collecteur connecté à celui des transistors $T_1$ et $T_2$. Un transistor npn $T'_2$ a sa base connectée au collecteur des transistors $T_1$ et $T_2$, son émetteur à la base du transistor $T_2$ et son collecteur à la source de tension V. Un transistor npn $T_3$ a sa base connectée à celle du transistor $T_2$, son émetteur à la masse, et son collecteur connecté à celui d'un transistor $T_4$ dont l'émetteur est à la masse et sur la base duquel est appliquée la tension Vref de manière à constituer une source de courant $I_o$. Le collecteur commun aux transistors $T_3$ et $T_4$ constitue la sortie S du circuit qui constitue une source de courant de valeur I. On notera que les transistors $T_{10}$ et $T'_{10}$ sont équivalents à une diode en direct dans la base de $T_1$, qui induit une tension base émetteur dans ce transistor égale à $V_o$ tant que du courant est disponible.

Le circuit présente trois régions de fonctionnement.

a) $I_L$ faible : $k_oI_L < xI_o$

Le transistor $T_o$ est saturé et le transistor $T_1$ est bloqué, et donc $T_2$ est passant et est traversé par le courant $yI_o$, code le transistor $T_3$ avec

lequel il forme une source de courant. On a donc $I = I_o(1+y)$ qui correspond à un gain maximal.

b) $I_L$ moyen $k_oI_L > xI_o$

Le transistor $T_o$ conduit normalement. Le transistor $T_1$ conduit donc $(k_oI_L.xI_o)$ et le transistor $T_2$ conduit donc le courant $yI_o-(k_oI_L-xI_o)$, de même que le transistor $T_3$.

On a donc $I = I_o(1+y) - (k_oI_L-xI_o)$

c) $I_L$ fort $k_oI_L > (x+y)I_o$

Le courant dans $T_2$ s'annule, d'où blocage du transistor $T_3$

On a alors $I = I_o$ (gain minimal)

La figure 2 représente un schéma standard permettant de générer un courant $k_oI_L$ et une tension d'alimentation V à partir d'un poste d'abonné. Le standard alimente les lignes d'abonné avec une tension de $V_s$ de 48V. Le courant $I_L$ que voit l'abonné dépend de la longueur de la ligne entre l'abonné et le standard (résistance de ligne $R_L$), de la valeur de la résistance du standard (en général 600Ω). Une diode Zener Z est disposée à l'entrée du poste d'abonné pour le protéger contre les surtensions, et un condensateur $C_o$ de valeur élevée (environ 100$\mu$F) est disposé entre une borne d'une résistance d'adaptation $R_a$ et la masse. Cette borne de la résistance $R_a$ délivre la tension d'alimentation V.

Une résistance $R_2$ est connectée entre l'entrée du poste d'abonné et l'entrée non inverseuse d'un amplificateur opérationnel A. Entre cette entrée de l'amplificateur A et la masse, est connecté un condensateur $C_2$ de valeur élevée (quelques $\mu$F) destiné à filtrer la composante alternative résiduelle. La sortie de l'amplificateur A est connectée à la base d'un transistor $T_{20}$ dont le collecteur est connecté à l'entrée du poste d'abonné, et dont l'émetteur constitue un point commun B à d'une part une résistance $R_1$ connectée entre le point B et l'entrée non inverseuse de l'amplificateur A, d'autre part une résistance R connectée entre le point B et la masse et enfin à la cathode de l'une des deux diodes $D_1$ et $D_2$ disposées en série entre l'entrée inverseuse de l'amplificateur A et le point B.

Soit $V_1$ la tension au noeud B et $V_2$ la tension à l'entrée non inverseuse de l'amplificateur A, et $V_D$ la tension aux bornes d'une diode.

On a

$V_2-V_1 = 2V_D$
$V_1 = RI_L$
$V_2 = RI_L + 2V_D$

L'entrée non inverseuse de l'amplificateur A est connectée à la base d'un transistor npn $T_{33}$ dont l'émetteur est relié à la masse à travers successivement une diode en direct $D_3$ et une résistance $R_3$. Le collecteur du transistor $T_{33}$ est connecté à la base d'un transistor $T_{32}$ dont le collecteur est à la masse. Un transistor $T_{30}$ présente $n_1$ collecteurs connectés à la base du transistor $T_{32}$. Le transistor $T_{22}$ est mis en oeuvre du fait que $V_2$ est référencée à la masse.

L'émetteur du transistor $T_{30}$ est référencé à la tension V à travers une résistance $R_{30}$ et sa base est connectée à l'émetteur du transistor $T_{32}$ et à la base d'un transistor $T_{31}$ dont l'émetteur est référencé à la source de tension V à travers une résistance $R_{31}$ et qui présente $n_2$ collecteurs (avec $n_2 \geq 1$) qui délivrent le courant $k_oI_L$. La borne non à la masse de la résistance $R_3$ est à un potentiel $V_3$.

Il vient :

$$V_3 = V_2 - 2V_D \simeq V_1 = RI_L$$

Le courant I′ qui traverse la résistance R′ vaut :

$$I' = \frac{R}{R'} I_L$$

Les transistors $T_{30}$ et $T_{31}$ forment une source de courant dans un rapport $n_2/n_1$ (ou plus généralement dans le rapport de surface de leurs collecteurs).

Il vient :

$$k_o = \frac{R}{R'} \frac{n_2}{n_1}$$

La figure 2 montre également un montage pour obtenir la tension Vref pour les sources de courant à transistors pnp (et une tension V′ref pour les sources de courant à transistor npn). Ce montage comporte une première branche mettant en oeuvre les trajets collecteur-émetteur en série de deux transistors pnp $T_{40}$ et npn $T_{41}$, le trajet émetteur base d'un transistor pnp $T'_{40}$ dont le collecteur est à la masse étant connecté entre la base et le collecteur du transistor $T_{40}$. Une résistance $R_{40}$ est disposée entre le ou les collecteurs du transistor $T_{41}$ et la masse. La deuxième branche présente en série les trajets émetteur-collecteur d'un transistor pnp $T_{41}$ et d'un transistor npn $T_{43}$ dont l'émetteur est à la masse. Le trajet base-émetteur d'un transistor npn $T'_{43}$ est connecté entre le collecteur et la base du transistor $T_{43}$. Les émetteurs des transistors $T_{40}$ et $T_{41}$ sont portés à une valeur égale à trois tensions de diode (3 $V_D$). Cette tension égale à 3 $V_D$ est obtenue à partir de la tension V qui alimente une source de courant $I_o$ qui force un courant $I_o$ dans trois diodes en série $D_{40}$, $D_{41}$ et $D_{42}$. La tension Vref est disponible sur les bases interconnectées des transistors $T_{40}$ et $T_{41}$, et la tension V′ref sur les bases interconnectées des transistors $T_{41}$ et $T_{43}$. Ces valeurs dépendent no-

tamment de la valeur de la résistance $R_{40}$.

Le circuit selon l'invention (fig. 3) se distingue de celui de la figure 1 par l'adjonction des transistors $T_{12}$ et npn $T_{14}$ et des diodes $D_{10}$, $D_{12}$ et $D'_{12}$. Le transistor $T_{12}$ a sa base connectée à la source de tension de référence Vref, son émetteur connecté à la source de tension d'alimentation V et il présente un ou plusieurs collecteurs reliés à la masse à travers deux diodes $D_{12}$ et $D'_{12}$ en direct. Il constitue une source de courant $zI_o$ le transistor $T_{14}$ a sa base connectés à la masse, et son collecteur est connecté à celui ou ceux du transistor $T_{12}$.

Une diode $D_{10}$ est connectée entre les collecteurs des transistors $T_1$ et $T_{14}$, son anode étant connectée au collecteur de transistor $T_1$.

On distingue alors quatre régions de fonctionnement :

a) $I_L$ faible : $k_oI_L < xI_o$

Le transistor $T_o$ est saturé, le transistor $T_1$ est bloqué, de même que le transistor $T_{14}$. Le courant $zI_o$ passe dans les diodes $D_{12}$ et $D'_{12}$ et le potentiel collecteur de $T_{12}$ vaut $2V_D$.

Le transistor $T_2$ conduit. Son potentiel collecteur vaut la soie des tensions base émetteur des transistors $T_2$ et $T'_2$ soit $2v_D$, ce qui implique que la diode $D_{10}$ est bloquée.

Le fonctionnement est donc le même que précédemment, et on a :

$I = I_o(1 + y)$, qui correspond à un gain maximal.

b) $I_L$ moyen inférieur $k_oI_L > xI_o$

Le transistor $T_{10}$ est traversé par le courant $k_oI_L - xI_o$

Le transistor $T_{14}$ qui présente w émetteurs (sur le dessin w = 3) est traversé par le courant $w(k_oI_L - xI_o)$

Les diodes $D_11$ et $D_{12}$ sont traversées par le courant $zI_o - w(k_oI_L - xI_o)$, donc la tension sur le collecteur de $T_{14}$ vaut $2V_D$. Le transistor $T_2$ conduit, donc la tension sur la base de $T'_2$ et donc sur le collecteur de $T_1$ vaut également $2V_D$. La diode $D_{10}$ est donc bloquée.

On est donc dans le même cas que pour le point b) de la figure 1, c'est-à-dire que le transistor $T_2$ conduit le courant $yI_o - (k_o I_L - xI_o)$ de même que le transistor $T_3$.

On a donc $I = I_o (1 + y) - (k_oI_L - xI_o)$

La pente est égale à $-k_o$.

c) $I_L$ moyen supérieur $w (kI_L - 3xI_o) - zI_o > 0$

Le transistor $T_1$ conduit le courant $k_oI_L - xI_o$, et $T_{14}$ conduit le courant $w(k_oI_L - xI_o)$, mais comme ce courant est supérieur à $zI_o$, le transistor $T_{14}$ tend à se saturer c'est-à-dire que sa tension collecteur tend vers $V_{CE}$ sat $\simeq 0$. Dès que sa tension de collecteur atteint le potentiel $V_D$, la diode $D_{10}$ peut conduire.

Il en résulte que les transistors $T_1$ et $T_{14}$ consomment l'une et l'autre du courant fourni par la source $yI_o$.

Le transistor $T_2$ conduit donc le courant :

$$yI_o - (k_oI_L - xI_o) - [w(k_oI_L - xI_o) - zI_o]$$

On a donc :

$$I = I_o(1 + y) - (w + 1)k_oI_L + (w + 1)xI_o + zI_o$$

La pente, égale à $-(w + 1)k_o$ est plus élevée que dans le cas b)

d) $I_L$ élevé $w(k_oI_L - xI_o) - zI_o + k_oI_L - xI_o \geqq yI_o$

Les transistors $T_1$ et $T_{14}$ consomment entièrement le courant $yI_o$.

Il s'ensuit que le transistor $T_2$ est bloqué.

On a donc $I = I_o$

Selon la figure 4, la courbe à deux pentes du circuit de la figure 3 présente une première partie I et une deuxième partie II plus pentue qui lui permet de suivre avec plus de précision une courbe caractéristique de correction dont l'allure est celle indiquée en traits pleins à la figure 5. La présence de cette courbe de correction à deux pentes permet d'obtenir un écart maximal entre la courbe théorique et la courbe réelle (en pointillés) qui est bien plus faible qu'avec une courbe de correction à une seule pente.

Des rapports x, y et z fractionnaires peuvent être obtenues avec la tension de référence Vref en utilisant à cet effet un montage de type miroir de courant diviseur similaire à celui décrit à la figure 2 pour obtenir le courant $k_oI_L$ (transistors $T_{30}$, $T_{31}$, diode $D_3$, résistance R′), ou bien plus simplement en jouant sur la surface des émetteurs. En effet, on a mentionné pour la clarté de l'exposé des nombres d'émetteurs. Il va de soi que les courants sont dans les rapports entre les surfaces d'émetteurs effectives.

Le schéma de la figure 6 comporte les mêmes éléments que celui de la figure 3 arrangés de la même façon à ceci près que l'anode de la diode $D_{10}$ est connectée au collecteur du transistor $T_{10}$ au lieu de l'être à celui du transistor $T_1$. Comme précédemmment, on obtient quatre zones de fonctionnement.

a) $I_L$ faible $k_oI_L < xI_o$

Le transistor $T_o$ est saturé. Le transistor $T_1$ est bloqué, de même que le transistor $T_{14}$. Le courant $zI_o$ passe entièrement dans les diodes $D_{12}$ et $D'_{12}$. La diode $D_{10}$ est donc polarisée en inverse.

On a $I = I_o (1 + y)$.

b) $I_L$ moyen inférieur $k_oI_L > xI_o$ et $wI_1 < zI_o$

Comme $wI_1$ courant traversant $T_{14}$, avec sur le dessin w = 3, (car $T_{14}$ a trois émetteurs) est plus faible que $zI_o$, les diodes $D_{12}$ et $D'_{12}$ sont

traversées par un courant suffisant pour leur donner une polarisation de diode passante. La cathode de $D_{10}$ se trouve donc à un potentiel de $2V_{BE}$. Le courant traversant le transistor $T_{10}$, et donc le transistor $T_1$, n'est pas nul. Le potentiel du collecteur de $T_{10}$ et donc de l'anode de $D_{10}$ est de $2V_{BE}$. La diode $D_{10}$ ne passe donc pas de courant.
On a

$$I_1 = k_oI_L - xI_o$$
$$\alpha I_1 = \alpha (k_oI_L - xI_o)$$
$$I = I_o + yI_o - \alpha(k_oI_L - xI_o)$$

Le courant I décroit en fonction du courant de ligne avec une pente $-\alpha k_oI_L$ (région I' de la figure 7).
c) $I_L$ moyen supérieur $k_oI_L > xI_o$ et $wI_1 < zI_o$
Les diodes $D_{12}$ et $D'_{12}$ ne reçoivent plus de courant et la tension de la cathode de $D_{10}$ commence à chuter, rendant ainsi la diode $D_{10}$ conductrice. Le courant soustrait à $k_oI_L$ devient donc

$$x I_o + (wI_1 - zI_o) + I_1$$

On a : $I = I_o + yI_o - \alpha I_1$
avec $k_oI_L - \alpha I_o = I_1 + (wI_1 - zI_o)$
d'ou

$$I_1 = \frac{k_o \bar{I}_L - (x+3) I_o}{1 + w}$$

Le courant I décroit avec une pente plus faible que dans le cas précédent b) en raison du courant soustrait par la diode $D_{10}$.
Cette pente à pour valeur

$$\frac{\alpha k_o}{1 + w}$$

(région II' de la figure 7).
d) $I_L$ élevé $\alpha I_1 > yI_o$
Le transistor $T_2$ est bloqué de même que $T_3$. On a $I = I_o$.
La figure 8 montre de quelle manière peut être approximée une courbe de gain correspondant au cas d'un poste téléphonique d'abonné convenant notamment pour des centraux comportant des abonnés très éloignés.
Le schéma de la figure 9 correspond enfin à une courbe de compensation à trois pentes successives permettant une compensation encore plus fine que dans le cas précédent. Au point de vue schéma électrique, elle correspond au mode de réalisation de la figure 6, avec addition en parrallèle d'un nouveau sous-ensemble $D'_{10}$, $D'_{12}$, $D'_{13}$, $T'_{14}$. L'anode de la diode $D'_{10}$ est connectée au collecteur du transistor $T_1$ et la cathode de la diode $D'_{10}$ est connectée d'une part au trajet collecteur-émetteur du transistor $T'_{14}$ dont l'émetteur est à la masse et d'autre part aux diodes en série et en direct $D'_{12}$ et $D'_{13}$, la cathode de $D'_{12}$ étant connectée à la masse. La base du transistor $T'_{14}$ est connectée à celle des transistors $T_1$ et $T_{14}$.

Un transistor $T'_{12}$ monté en source de courant fournit un courant $z'I_o$ au noeud commun au collecteur de $T'_{14}$, à la cathode de $D'_{10}$ et à l'anode de $D'_{12}$. On obtient ainsi à l'aide de ces deux montages en parallèle une courbe de connection à trois pentes de valeurs décroissantes, successivement $-\alpha k_o$,

$$- \frac{\alpha k_o}{(1 \times w)} \quad , \quad - \frac{\alpha k_o}{1 + w + w'}$$

Le transistor $T_{10}$ présente par hypothèse un seul émetteur et $w$ et $w'$ désignent le nombre d'émetteurs des transistors respectivement $T_{14}$ et $T'_{14}$ (ou bien le rapport de la surface d'émetteur de ce transistor avec celui de $T_{10}$). Le choix de $w$, $w'$, $z$ et $z'$ détermine les pentes et la position des points de raccordement. Les deux sous-ensembles ($D_{10}$, $D_{12}$ $D_{13}$ $T_{14}$) ($D'_{10}$, $D'_{12}$, $D'_{13}$, $T'_{14}$) interviennent successivement en additionnant leurs actions, selon le même principe de fonctionnement que dans les exemples précédents.

## Revendications

1. Circuit de compensation destiné à produire un courant de sortie (I) présentant une caractéristique de courant donnée en fonction de la valeur d'un courant d'entrée ($I_L$), la caractéristique de courant présentant une valeur maximale ( $I_o + yI_o$) et une valeur minimale ($I_o$), circuit comprenant un moyen pour délivrer un premier courant ($k_oI_L$) proportionnel au courant d'entrée ($I_L$), en série avec une première source de courant ($T_o$, Vref) délivrant un deuxième courant ($xI_o$) proportionnel à un courant de référence ($I_o$) de manière à produire un premier courant résultant ($I_{(T1)}$) qui est positif lorsque le premier courant ($k_oI_L$) est supérieur au deuxième courant ($xI_o$) et nul dans le cas contraire, un premier étage de commutation ($T_{10}$) agencé pour être à l'état bloqué lorsque le premier courant résultant ($I_{(T1)}$) est nul, et pour être traversé par celui-ci lorsqu'il est positif, un deuxième étage de commutation ($T_1$) agencé pour être traversé par le même courant que le premier étage de commutation ($T_{10}$), une deuxième source de courant ($T_{11}$, Vref)

agencée pour délivrer un troisième courant ($yI_o$) proportionnel au courant de référence ($I_o$) et disposée en série avec le deuxième étage de commutation ($T_1$) de manière à produire un deuxième courant résultant ($I_{(T2)}$) qui est positif lorsque le troisième courant ($yI_o$) est supérieur au premier courant résultant ($I_{(T1)}$), un troisième étage de commutation ($T_2$) agencé pour être à l'état bloqué lorsque le deuxième courant résultant ($I_{(T2)}$) est nul et pour être traversé par celui-ci lorsqu'il est positif, un premier étage de sortie de courant ($T_3$) agencé pour délivrer un courant égal au courant traversant le troisième étage de commutation ($T_2$) et un deuxième étage de sortie de courant ($T_4$) disposé en parallèle avec le premier étage de sortie de courant ($T_3$) et agencé pour délivrer un courant égal au courant de référence ($I_o$), dont la valeur est donc ladite valeur minimale de la caractéristique de courant de sortie, caractérisé en ce qu'il comporte au moins un circuit de compensation disposé en parallèle avec l'un des premier ($T_{10}$) et deuxième ($T_1$) étages de commutation, qui comprend d'une part une troisième source de courant ($T_{12}$) agencée pour délivrer un quatrième courant ($zI_o$) proportionnel au courant de référence ($I_o$), en série avec une quatrième source de courant ($T_{14}$) agencée pour délivrer un courant proportionnel à celui qui est délivré par le premier étage de commutation ($T_{10}$) et d'autre part un circuit de blocage ($D_{10}$, $D_{12}$, $D'_{12}$) agencé pour connecter la quatrième source de courant ($T_{14}$) en parallèle avec au moins un des premier ($T_{10}$) et deuxième ($T_1$) étages de commutation lorsque le courant qui traverse la quatrième source de courant ($T_{14}$) est supérieur au quatrième courant ($zI_o$).

2. Circuit selon la revendication 1, caractérisé en ce que le premier étage de commutation comporte un premier transistor ($T_{10}$) dont le trajet collecteur-émetteur est disposé en parallèle avec la première source de courant ($T_o$, Vref) et un deuxième transistor ($T'_{10}$) dont le trajet base-émetteur est disposé en parallèle sur le trajet collecteur-émetteur du premier transistor ($T_{10}$), et en ce que le deuxième étage de commutation comporte un troisième transistor ($T_1$) dont la base est connectée à celle du premier transistor ($T_{10}$).

3. Circuit selon une des revendications 1 ou 2, caractérisé en ce que le troisième étage de commutation comporte un quatrième transistor ($T_2$) dont le trajet collecteur-émetteur est disposé en parallèle avec le deuxième étage de commutation ($T_1$) et un cinquième transistor ($T'_2$) dont le trajet base-émetteur est disposé en parallèle sur le trajet collecteur-émetteur du quatrième transistor ($T_2$), et en ce que le premier étage de sortie comporte un sixième transistor ($T_3$) dont la base est connectée à celle du quatrième transistor ($T_2$).

4. Circuit selon une des revendications 1 à 3, caractérisé en ce qu'au moins un circuit de blocage comporte une première diode ($D_{10}$) en série avec ledit moyen pour délivrer le premier courant ($k_oI_L$) proportionnel au courant d'entrée ($I_L$) et une deuxième ($D_{12}$) et une troisième ($D'_{12}$) diodes en parallèle avec la quatrième source de courant ($T_{14}$).

5. Circuit selon une des revendications précédentes, caractérisé en ce qu'au moins un circuit de blocage comporte une quatrième diode ($D_{20}$) en série avec la deuxième source de courant ($T_{11}$) et une cinquième ($D_{22}$) et une sixième diode ($D'_{22}$), en parallèle avec la quatrième source de courant ($T_{14}$).

6. Circuit selon la revendication 4, caractérisé en ce qu'il comporte deux circuits de compensation ($T_{12}$, $T_{14}$, $D_{10}$, $D_{12}$, $D'_{12}$), ($T'_{12}$, $T'_{14}$, $D_{20}$, $D_{22}$, $D'_{22}$) disposés en parallèle avec le premier étage de commutation ($T_{10}$).

## Claims

1. Compensating circuit intended to produce an output current (I) which has a given current characteristic as a function of the value of a input current ($I_L$), the current characteristic having a maximum value ($I_o + yI_o$) and a minimum value ($I_o$), which circuit comprises a means for producing a first current ($k_oI_L$) which is proportional to the input current ($I_L$), connected in series with a first current source ($T_o$, Vref) which produces a second current ($xI_o$) which is proportional to a reference current ($I_o$), in order to produce a first resulting current ($I_{(T1)}$) which is positive when the first current ($k_oI_L$) is higher than the second current ($xI_o$) and zero in the opposite case, a first switching) stage ($T_{10}$) arranged for being non-conductive when the first resulting current ($I_{(T1)}$) is zero, and passed through thereby when it is positive, a second switching stage ($T_1$) arranged for being passed through by the same current as the first switching stage ($T_{10}$), a second current source ($T_{11}$, Vref) arranged for supplying a third current ($yI_o$) which is proportional to the reference current ($I_o$) and connected in series with the second switching stage ($T_1$), in a manner such as to generate a second resulting current ($I_{(T2)}$)

which is positive when the third current ($yl_o$) is higher than the resulting first current ($I_{(T1)}$), a third switching stage ($T_2$) arranged for being non-conductive when the second resulting current ($I_{(T2)}$) is zero, and passed through thereby when it is positive, a first current output stage ($T_3$) arranged for supplying a current which is equal to the current passing through the third switching stage ($T_2$) and a second current output stage ($T_4$) connected in parallel with the first current output stage ($T_3$) and arranged for supplying a current which is equal to the reference current ($I_o$), whose value is thus said minimum value of the output current characteristic, characterized in that it comprises at least a compensating circuit connected in parallel with one of the first ($T_{10}$) and second ($T_1$) switching circuits and comprising, on the one hand, a third current source ($T_{12}$) arranged for supplying a fourth current ($zl_o$) which is proportional to the reference current ($I_o$), connected in series with a fourth current source ($T_{14}$) arranged for supplying a current in proportion to the current supplied by the first switching stage ($T_{10}$) and, on the other hand, a blocking circuit ($D_{10}$, $D_{12}$, $D'_{12}$) arranged for connecting the fourth current source ($T_{14}$) parallel with at least one of the first ($T_{10}$) and second ($T_1$) switching circuits when the current passing through the fourth current source ($T_{14}$) is larger than the fourth current ($zl_o$).

2. Circuit as claimed in claim 1, characterized in that the first switching circuit comprises a first transistor ($T_{10}$) whose collector-emitter path is connected in parallel with the first current source ($T_o$, Vref) and a second transistor ($T_{10}$)- whose base-emitter path is connected in parallel with the collector-emitter path of the first transistor ($T_{10}$), and in that the second switching stage comprises a third transistor ($T_1$) whose base is connected to that of the first transistor ($T_{10}$).

3. Circuit as claimed in one of the Claims 1 or 2, characterized in that the third switching circuit comprises a fourth transistor ($T_2$) whose collector-emitter path is connected in parallel with the second switching stage ($T_1$) and a fifth transistor ($T'_2$) whose base-emitter path is connected in parallel with the collector-emitter path of the fourth transistor ($T_2$), and in that the first output stage comprises a sixth transistor ($T_3$) whose base is connected to that of the fourth transistor ($T_2$).

4. A circuit as claimed in one of the Claims 1 to 3, characterized in that at least one blocking circuit comprises a first diode ($D_{10}$) connected in series with said means for supplying the first current ($kol_L$) which is proportional to the input current ($I_L$) and a second diode ($D_{12}$) and a third diode ($D'_{12}$) connected in parallel with the fourth current source ($T_{14}$).

5. Circuit as claimed in one of the preceding Claims, characterized in that at least one blocking circuit comprises a fourth diode ($D_{20}$) connected in series with the second current source ($T_{11}$) and a fifth ($D_{22}$) and a sixth diode ($D'_{22}$) connected in parallel with the fourth current source ($T_{14}$).

6. Circuit as claimed in Claim 4, characterized in that it comprises two compensating circuits ($T_{12}$, $T_{14}$, $D_{10}$, $D_{12}$, $D'_{12}$), ($T'_{12}$, $T'_{14}$, $D_{20}$, $D_{22}$, $D'22$) connected in parallel with the first switching circuit ($T_{10}$).

**Patentansprüche**

1. Ausgleichsschaltung zum Erzeugen eines Ausgangsstromes (I) mit einer bestimmten Stromkennlinie als Funktion des Wertes eines Eingangsstromes ($I_L$), wobei die Stromkennlinie einen maximalen ($I_o + yl_o$) und einen minimalen Wert ($I_o$) hat, wobei diese Schaltungsanordnung ein Mittel aufweist zum Erzeugen eines zum Eingangsstrom ($I_L$) proportionalen ersten Stromes ($k_ol_L$), das mit einer ersten Stromquelle ($T_o$, Vref) in Reihe liegt und einen zweiten zu einem Bezugsstrom ($I_o$) proportionalen Strom ($xl_o$) erzeugt, um einen ersten resultierenden Strom ($I_{(T1)}$) zu erzeugen, der positiv ist, wenn der erste Strom ($k_ol_L$) höher ist als der zweite Strom ($xl_o$) und Null im entgegengesetzten Fall, wobei eine erste Schaltstufe ($T_{10}$) vorgesehen ist, die nichtleitend ist, wenn der erste resultierende Strom ($I_{(T1)}$) Null ist und dadurch durchlässig ist, wenn dieser Strom positiv ist, wobei weiterhin eine zweite Schaltstufe ($T_1$) vorgesehen ist, die von demselben Strom durchflossen wird wie die erste Schaltstufe ($T_{10}$), wobei eine zweite Stromquelle ($T_{11}$, Vref) vorgesehen ist zum Liefern eines zu dem Bezugsstrom ($I_o$) proportionalen dritten Stromes ($yl_o$), die mit der zweiten Schaltstufe ($T_1$) derart in Reihe liegt, daß ein zweiter resultierender Strom ($I_{(T2)}$) erzeugt wird, der positiv ist, wenn der dritte Strom ($yl_o$) höher ist als der resultierende erste Strom ($I_{(T1)}$), wobei eine dritte Schaltstufe ($T_2$) vorgesehen ist, die nichtleitend ist, wenn der zweite resultierende Strom ($I_{(T2)}$) Null ist, und die durchflossen wird, wenn dieser Strom positiv ist, wobei eine erste Stromausgangsstufe ($T_3$) vorgesehen ist zum

Liefern eines Stromes, der dem Strom durch die dritte Schaltstufe ($T_2$) entspricht und wobei eine zweite Stromausgangsstufe ($T_4$) parallel zu der ersten Stromausgangsstufe ($T_3$) vorgesehen ist zum Liefern eines Stromes, der dem Bezugsstrom ($I_o$) entspricht, dessen Wert folglich der genannte minimale Wert der Ausgangsstromkennlinie ist, dadurch gekennzeichnet, daß sie wenigstens eine Ausgleichsschaltung aufweist, die mit einer der ersten ($T_{10}$) und zweiten ($T_1$) Schaltstufen parallel verbunden ist und, einerseits, eine dritte Stromquelle ($T_{12}$) aufweist zum Liefern eines zum Bezugsstrom ($I_o$) proportionalen vierten Stromes ($zI_o$), und die mit einer vierten Stromquelle ($T_{14}$) zum Liefern eines Stromes entsprechend dem von der ersten Schaltstufe ($T_{10}$) gelieferten Strom in Reihe geschaltet ist und andererseits eine Sperrschaltung ($D_{10}$, $D_{12}$, $D'_{12}$) aufweist zum Verbinden der vierten Stromquelle ($T_{14}$) parallel zu mindestens einer der ersten ($T_{10}$) und zweiten ($T_1$) Schaltstufen, wenn der durch die vierte Stromquelle ($T_{14}$) fließende Strom größer ist als der vierte Strom ($zI_o$).

2. Schaltungsanordnung nach Anspruch 1, dadurch gekennzeichnet, daß die erste Schaltstufe einen ersten Transistor ($T_{10}$) aufweist, dessen Kollektor-Emitter-Strecke zu der ersten Stromquelle ($T_o$, Vref) parallelgeschaltet ist und einen zweiten Transistor ($T'_{10}$), dessen Basis-Emitter-Strecke zu der Kollektor-Emitter-Strecke des ersten Transistors ($T_{10}$) parallelgeschaltet ist, und daß die zweite Schaltstufe einen dritten Transistor ($T_1$) aufweist, dessen Basis mit der des ersten Transistors ($T_{10}$) verbunden ist.

3. Schaltungsanordnung nach Anspruch 1 oder 2, dadurch gekennzeichnet, daß die dritte Schaltstufe einen vierten Transistor ($T_2$) aufweist, dessen Kollektor-Emitter-Strecke zu der zweiten Schaltstufe ($T_1$) parallelgeschaltet ist und einen fünften Transistor ($T'_2$), dessen Basis-Emitter-Strecke zu der Basis-Emitter-Strecke des vierten Transistors ($T_2$) parallelgeschaltet ist und daß die erste Ausgangsstufe einen sechsten Transistor ($T_3$) aufweist, dessen Basis mit der des vierten Transistors ($T_2$) verbunden ist.

4. Schaltungsanordnung nach einem der Ansprüche 1 bis 3, dadurch gekennzeichnet, daß mindestens eine Sperrschaltung eine erste Diode ($D_{10}$) aufweist, die mit dem genannten Mittel zum Liefern des zu dem Eingangsstrom ($I_L$) proportionalen ersten Stromes ($k_oI_L$) in Reihe liegt, und eine zweite ($D_{12}$) und eine dritte

Diode ($D'_{12}$), die zu der vierten Stromquelle ($T_{14}$) parallelgeschaltet sind.

5. Schaltungsanordnung nach einem der vorstehenden Ansprüche, dadurch gekennzeichnet, daß mindestens eine Sperrschaltung eine vierte Diode ($D_{20}$) aufweist, die mit der zweiten Stromquelle ($T_{11}$) in Reihe liegt, und eine fünfte ($D_{22}$) und sechste Diode ($D'_{22}$), die zu der vierten Stromquelle ($T_{14}$) parallelgeschaltet ist.

6. Schaltungsanordnung nach Anspruch 4, dadurch gekennzeichnet, daß sie zwei Ausgleichsschaltungen ($T_{12}$, $T_{14}$, $D_{10}$, $D_{12}$, $D'_{12}$), ($T'_{12}$, $T'_{14}$, $D_{20}$, $D_{22}$, $D'_{22}$) aufweist, die zu der ersten Schaltstufe ($T_{10}$) parallelgeschaltet sind.

FIG. 1

FIG. 2

FIG. 3

FIG. 4

FIG. 5

FIG. 6

FIG.7

FIG.8

FIG.9

FIG.10

FIG.11